# EUROPÄISCHE PATENTANMELDUNG

(11) **EP 2 267 648 A2**
(43) Veröffentlichungstag der Anmeldung: **29.12.2010**
(21) Anmeldenummer: 10166632.9
(22) Anmeldetag: 21.06.2010
(51) Int. Cl.: G06K 19/073

(54) **Vorrichtung und Verfahren zur Überwachung von Behältern**

(30) Priorität: 26.06.2009 DE 102009030713
(71) Anmelder: SIEMENS AKTIENGESELLSCHAFT, 80333 München (DE)
(72) Erfinder: Klein, Cornel, 82041 Oberhaching (DE); Schöler, Thorsten, 87600 Kaufbeuren (DE); Wagner, Thomas, 91088 Bubenreuth (DE); Ziegler, Roland, 90768 Fürth (DE)

(57) **Zusammenfassung**

Die Vorrichtung zur Überwachung eines Behälters weist ein Siegel auf, welches zur Änderung seines Zustands bei einem Öffnen des Behälters ausgelegt ist. Weiterhin weist die Vorrichtung eine Recheneinheit auf, welche zum Empfang des Zustands des Siegels und zur Kommunikation des Zustands des Siegels mit Hilfe eines Kommunikationsmittels eingerichtet ist. Gemäß einer Weiterbildung der Vorrichtung ist die Recheneinheit eingerichtet, um ein Zertifikat in einem Speicher abzulegen, welches einen Status des Behälters repräsentiert. Die beschriebenen Varianten verhindern beim Einsatz auf Flughäfen wirkungsvoll ein unerlaubtes Öffnen von Gepäckstücken, eine Umgehung von Sicherheitsbestimmungen oder auch ein Einschmuggeln von Gepäckstücken. Sicherheitsprüfungen lassen sich durch flughafenübergreifende Koordination auf Basis der auf den Behälter 1 gespeicherten Zertifikate 8 reduzieren. Ein eindeutiger Nachweis eines Besitzers eines Behälters 1 ermöglicht eine Fehlervermeidung bei Gepäcktransport und eine einfachere Handhabung von herrenlosen Gepäckstücken. Weitere Anwendungen sind bei Transportbehältern für Organe oder Wertgegenstände denkbar.

## Beschreibung

Die Überwachung von Behältern, beispielsweise Gepäckstücken wie etwa Reisekoffern, Reisetaschen, Laptoptaschen oder andere Formen von Reisegepäck bzw. Handgepäck, muss heute erhöhten Sicherheitsanforderungen genügen. Dies stellt neue Herausforderungen an den Arbeitsablauf bei der Handhabung solcher Behälter. So führt etwa eine Behandlung herrenloser, d.h. keiner Person zuordenbarer Gepäckstücke aufgrund potentieller Anschlagsgefahr und deshalb notwendiger Überprüfungen zu einem hohen Aufwand. Weiterhin bedeutet Verlust von Gepäckstücken eine signifikante Problematik im Flugverkehr.

Es ist bekannt, Reisende und Crews in Sicherheitsschleusen abzutasten und mit Metalldetektoren auf metallische Gegenstände zu untersuchen. Behälter wie Gepäckstücke und sonstiges Transportgut werden mit technischen Geräten durchleuchtet (zum Beispiel mit Röntgenstrahlen und zu dem Zweck speziell entwickelten Prüfgeräten), um zu verhindern, dass Waffen oder Sprengstoff an Bord eines Flugzeugs gebracht werden. In Zweifelsfällen wird ein Gepäckstück geöffnet und durchsucht. Unbeaufsichtigte Gepäckstücke werden vom Sicherheitspersonal entfernt und untersucht.

Der Erfindung liegt daher die Aufgabe zu Grunde, eine Vorrichtung und ein Verfahren zur Überwachung von Behältern anzugeben, welche die Überwachung vereinfachen oder verbessern.

Diese Aufgabe wird erfindungsgemäß durch eine Vorrichtung zur Überwachung eines Behälters gelöst, die ein Siegel aufweist, welches zur Änderung seines Zustands bei einem Öffnen des Behälters ausgelegt ist. Weiterhin weist die Vorrichtung eine Recheneinheit auf, welche zum Empfang des Zustands des Siegels und zur Kommunikation des Zustands des Siegels mit Hilfe eines Kommunikationsmittels eingerichtet ist.

Bei dem Verfahren zur Überwachung mindestens eines Behälters ändert ein Siegel seinen Zustand bei einem Öffnen des Behälters. Eine Recheneinheit empfängt den Zustand des Siegels und kommuniziert diesen mit Hilfe eines Kommunikationsmittels.

Die Vorrichtung und das Verfahren weisen den Vorteil auf, dass ein unerlaubtes Öffnen des Behälters erkannt und signalisiert wird, indem die Recheneinheit den Zustand des Siegels mit Hilfe des Kommunikationsmittels kommuniziert. Dies erhöht die Sicherheit beispielsweise bei der Behandlung von Transport- und Handgepäck. Weiterhin können spätere Sicherheitsprüfungen entfallen, sofern die Recheneinheit kommuniziert, dass der Zustand des Siegels unversehrt ist. Hierdurch wird der bisher bekannte Arbeitsablauf bei der Überwachung von Behältern, insbesondere bei der Gepäckhandhabung auf Flughäfen, stark vereinfacht.

Gemäß einer Weiterbildung der Vorrichtung ist die Recheneinheit eingerichtet, um mindestens ein Zertifikat in einem Speicher abzulegen, welches einen Status des Behälters repräsentiert.

Bei der Weiterbildung des Verfahrens legt die Recheneinheit mindestens ein Zertifikat in einem Speicher ab, welches einen Status des Behälters repräsentiert.

Das Speichern eines Zertifikats ermöglicht eine lückenlose Überwachung und deutlich erhöhte Sicherheit. Unerlaubtes Öffnen von Behältern, Umgehung von Sicherheitsprüfungen oder auch ein Einschmuggeln von Behältern wird erkannt. Durch eine flughafenübergreifende Koordination auf Basis der Zertifikate können zusätzliche Sicherheitsprüfungen entfallen. Weiterhin ist bei entsprechender Ausgestaltung des Zertifikats ein eindeutiger Nachweis eines Eigentümers eines Behälters möglich, wodurch Fehler beim Gepäcktransport vermieden und herrenlose Gepäckstücke einfacher gehandhabt werden können. Ferner stellen die Zertifikate etwa in Flugzeugen eine erhöhte Sicherheit bereit, da vollständige Transparenz eines Sicherheitsstatus beispielsweise von Handgepäck als Behältern gegeben ist. Bei Transferflügen können zusätzliche Sicherheitsprüfungen für Transportgepäck entfallen, wenn deren Zertifikate anzeigen, dass dieses seit der letzten Sicherheitsprüfung nicht geöffnet wurde. Die Zertifikate ermöglichen weiterhin eine Reduktion einer Anzahl von Zollkontrollen. Aufwändige sicherheitstechnische Maßnahmen für herrenlose Gepäckstücke werden überflüssig, wenn das Zertifikat des jeweiligen Behälters anzeigt, dass er eine Sicherheitsprüfung durchlaufen hat und seitdem nicht geöffnet wurde. Abschließend ermöglichen die Zertifikate eine lückenlose Überwachung und Nachvollziehbarkeit von Transportrouten bzw. einer Historie von Aufenthaltsorten und -bereichen etwa von Gepäckstücken.

Weitere vorteilhafte Ausführungsformen der Erfindung sind durch die Merkmale der Unteransprüche gekennzeichnet.

Im Folgenden werden Ausführungsbeispiele der Erfindung anhand von Figuren näher erläutert. Es zeigen:
- Figur 1:: einen Behälter mit Überwachungseinheit,
- Figur 2:: eine Detailansicht des Behälters,
- Figur 3:: eine Detailansicht der Überwachungseinheit,
- Figur 4:: einen Überblick über ein Lokalisierungssystem, ein Transportsystem und ein Überwachungssystem von Ge- päckstücken.

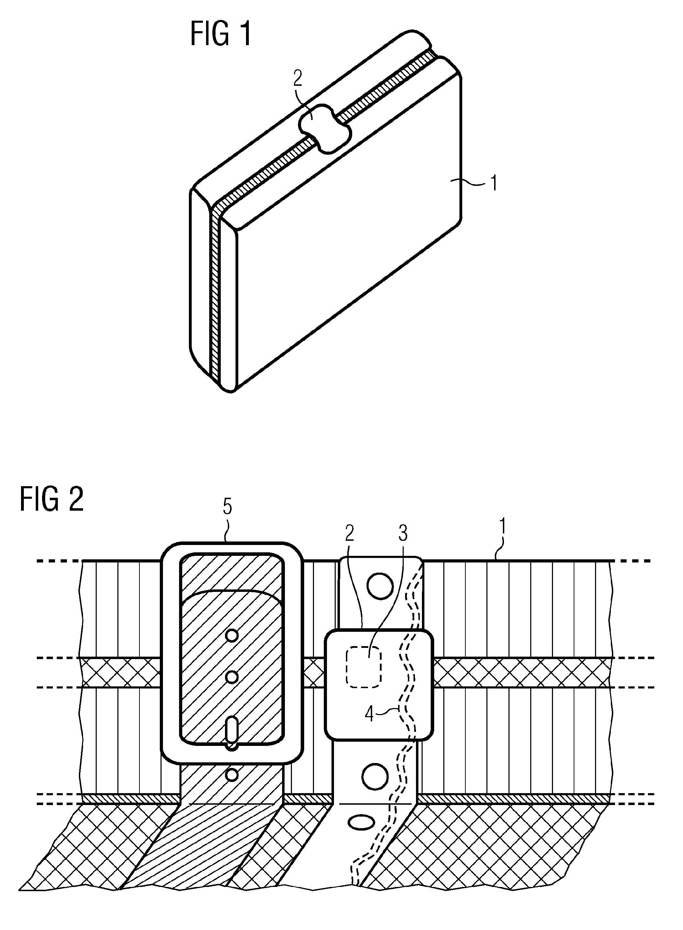

Figur 1 zeigt einen Behälter 1 mit einer Überwachungseinheit 2. Der Behälter 1 ist hier als Koffer dargestellt. Bei dem Behälter 1 muss es sich nicht um Reisegepäck handeln, er könnte beispielsweise auch eine Transportverpackung für den Warenversand sein. Der Behälter 1 könnte auch Material enthalten, welches besonderen Sicherheitsanforderungen genügen muss. Bei einer medizinischen Anwendung könnte der Behälter 1 etwa ein zu transplantierendes Organ enthalten. In diesem Fall ist eine Information, dass der Behälter 1 nicht zwischenzeitlich geöffnet wurde, von großer Bedeutung, da unerlaubtes Öffnen zu einer bakteriellen Kontamination seines Inhalts führen könnte. Der Behälter 1 könnte auch Wertgegenstände oder vertrauliche Informationen enthalten, so dass von besonderer Bedeutung ist, ob der Behälter 1 zwischenzeitlich geöffnet wird, da dies einen Diebstahl anzeigen könnte. Der Behälter 1 könnte aber auch radioaktives oder giftiges Material enthalten; in diesem Fall wäre die Information, ob der Behälter 1 geöffnet wurde, beispielsweise aus ökologischen oder sicherheitstechnischen Gründen von Bedeutung.

Figur 2 zeigt eine Detailansicht des Behälters 1. Dieser ist zum einen durch eine mechanische Verschlussvorrichtung 5 verschlossen. Zum anderen weist der Behälter 1 die aus Figur 1 bekannte Überwachungseinheit 2 auf, die in ihrem Inneren eine Recheneinheit 3 sowie ein Siegel 4 beinhaltet. In einer Variante übernimmt die Überwachungseinheit 2 selbst die Funktion der mechanischen Verschlussvorrichtung 5, wodurch letztere entfallen kann. Das Siegel 4 ist so ausgelegt, dass bei einem Öffnen des Behälters 1 sein Zustand geändert wird. Die Recheneinheit 3 ist dazu eingerichtet, den Zustand des Siegels 4 zu empfangen und mit Hilfe eines Kommunikationsmittels zu kommunizieren.

Auf diese Weise lässt sich überprüfen, dass der Behälter 1 nicht bzw. nicht unautorisiert geöffnet wurde. Wenn der Behälter 1 beispielsweise ein zu transplantierendes Organ beinhaltet, so ermöglicht die Überwachungseinheit 2 sicherzustellen, dass der Inhalt nicht durch unautorisiertes Öffnen kontaminiert wurde. Vergleichbares gilt für die anderen beschriebenen Anwendungsfälle.

Das Siegel 4, vorzugsweise ein elektronisches Siegel, zeigt ein unbefugtes Öffnen des Behälters 1 an und stellt diese Information der Recheneinheit 3 bereit, entweder unmittelbar oder auf Anfrage der Recheneinheit 3, welche das Siegel 4 überwacht. Das Siegel 4 kann durch optische oder mechanische Sensoren, durch beim Öffnen zerstörte elektrische oder optische Leiter oder beim Öffnen zerstörte elektronische Bauelemente oder Schaltkreise implementiert werden. Je nach Anwendung wird das Siegel 4 so gestaltet, dass es seinen Zustand, nur bei gewaltsamem bzw. unautorisiertem Öffnen, oder bei jeder Öffnung des Behälters 1 ändert.

Beispielsweise kann das Siegel 4 einen der beiden Zustände "intakt" oder "gebrochen" annehmen. Diese Definition legt nahe, dass das Siegel 4 - wie ein Wachssiegel - nicht ohne weiteres vom Zustand "gebrochen" in den Zustand "intakt" zurückwechseln kann. Unter welchen Voraussetzungen der Zustand des Siegels 4 von "gebrochen" nach "intakt" zurückgesetzt werden kann, hängt einerseits von der physikalischen Ausgestaltung des Siegels 4 und andererseits von den Anforderungen der jeweiligen Anwendung ab. Bei einer Sicherheitsüberwachung in Flughäfen sollte ein einfaches Schließen des Behälters 1 nach unautorisierter Öffnung den Zustand des Siegels 4 nicht zurücksetzen. Erfolgt die Öffnung jedoch durch Sicherheitspersonal, so ist es ggf. wünschenswert, den Zustand des Siegels nach dem Schließen auf "intakt" zurückzusetzen. Enthält der Behälter 1 jedoch sterilisiertes Material in einer klinischen Anwendung, so darf der Zustand des Siegels 4 nach dem Öffnen keinesfalls nach "intakt" zurückgesetzt werden, sofern der Inhalt des Behälters nicht zwischenzeitlich erneut sterilisiert wurde.

Die Überwachungseinheit 2 ist so an den Behälter 1 angebracht, dass sie durch Unbefugte nicht ohne Weiteres entfernt werden kann. Hierzu sind in Figur 2 Nieten und ein Band, welches den Behälter 1 umschließt, gezeigt. Die Anbringung der Überwachungseinheit 2 am Behälter 1 sollte so gestaltet sein, dass bei unbefugtem Entfernen der Überwachungseinheit 2 das Siegel 4 zerstört wird bzw. seinen Zustand ändert. Hierdurch kann ein unbefugtes Entfernen der Überwachungseinheit 2 erkannt werden.

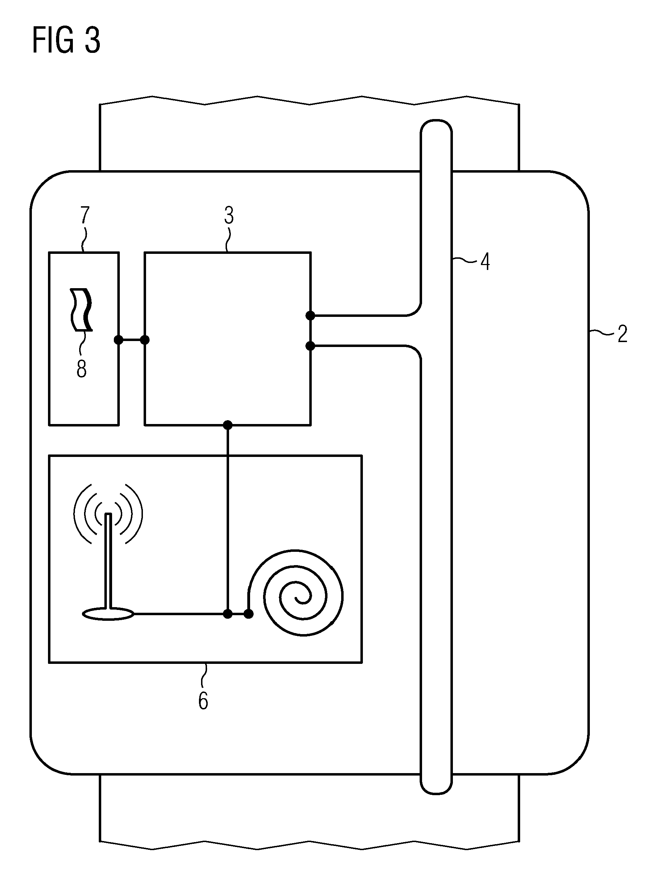

Figur 3 zeigt eine Detailansicht der Überwachungseinheit 2. Neben dem Siegel 4 und der Recheneinheit 3 aus Figur 2 ist zusätzlich ein Kommunikationsmittel 6 (hier als Antenne in zwei Ausführungen) gezeigt. Weiterhin beinhaltet die Darstellung von Figur 3 einen Speicher 7, welcher ein Zertifikat 8 enthält.

Mit dem Kommunikationsmittel 6 kommuniziert die Recheneinheit 3 den Zustand des Siegels 4. Gemäß einer Weiterbildung legt die Recheneinheit 3 das Zertifikat 8 im Speicher 7 ab, wobei das Zertifikat 8 einen Status des Behälters 1 repräsentiert. Es kann auch eine Mehrzahl von Zertifikaten 8 im Speicher 7 abgelegt werden, welche gemeinsam den Status des Behälters 1 repräsentieren.

Der Status der Behälters 1 ist im Flughafenszenario beispielsweise ein Versiegelungsstatus, ein Sicherheitsstatus oder ein Zollstatus (oder in medizinischer Anwendung ein Kontaminationsstatus oder Verfallsstatus) oder die Summe oder eine Teilmenge dieser oder anderer Informationen.

Wenn das Siegel 4 beispielsweise so ausgestaltet ist, dass ein einfaches Schließen des Behälters 1 ausreicht, um seinen Zustand nach "intakt" zurückzusetzen, dient der Versiegelungsstatus als Gedächtnis für den Bruch des Siegels. Demnach kann der Versiegelungsstatus einen der beiden Werte "versiegelt" oder "aufgebrochen" annehmen. Hierbei verbleibt der Versiegelungsstatus im Wert "aufgebrochen", auch wenn der Behälter 1 nach unautorisiertem Öffnen wieder geschlossen wird.

Der Sicherheitsstatus beinhaltet beispielsweise Informationen zu erfolgreich durchgeführten Sicherheitsprüfungen (mit ggf. unterscheidbaren Sicherheitsstufen für unterschiedliche Sicherheitszonen, vgl. unten), zum geographischen Ort und Land der Sicherheitsprüfung, zum durchführenden Sicherheitspersonal (Dienstnummer, Name des Sicherheitsdienstes oder der Behörde), zur betreffenden Fluggesellschaft, Flugnummer oder ähnlichem. Diese Informationen können bei Transferflügen von Nutzen sein. Wurde etwa Gepäck bereits durch einen Sicherheitsdienst mit bekannt hoher Qualität geprüft, ist dies ggf. später anders zu behandeln als Gepäck, welches lediglich eine Sicherheitsprüfung auf einem Flughafen in einem Entwicklungsland mit eingeschränkter technischer Ausstattung durchlaufen hat.

Der Zollstatus kann etwa eine Deklaration des Besitzers 1 enthalten, mit der dieser den Inhalt der Behälters 1 als zollfrei oder als zu verzollen deklariert. Alternativ oder ergänzend gibt der Zollstatus bereits erfolgte Zollprüfungen an. Hierbei bieten sich wiederum Detailinformationen wie oben an (Zollbehörde, Datum, zugrunde liegende Zollbestimmungen, Gebühren o.Ä.). Der Zollstatus kann aber auch als einfaches Feld mit den beiden Werten "geprüft" und "ungeprüft" implementiert werden.

Der Kontaminationsstatus gibt an, ob der Inhalt des Behälters 1 durch unautorisierte Öffnung kontaminiert wurde oder noch medizinischen Anforderungen bspw. an Sterilität oder Lagerungstemperatur entspricht. Der Verfallsstatus kann etwa angeben, ob in dem Behälter 1 enthaltene Medikamente ihr Verfallsdatum bereits überschritten haben oder nicht.

Der Status der Behälters 1 kann ferner ein Identifikationsmerkmal sowie Informationen zu einem Aufenthaltsort des Behälters 1, zu einer Historie seiner Aufenthaltsorte, zu seinem Besitzer, zu einer Flugnummer, einem Zielflughafen oder ähnlichem enthalten.

Die Überwachungseinheit 2 erlaubt es (ggf. im Zusammenspiel mit zusätzlichen Systemen, die weiter unten beschrieben sind), den Behälter 1 zu identifizieren, seinen Aufenthaltsort zu bestimmen sowie digitale Informationen wie etwa den Status lokal im Speicher 7 zu speichern (als Zertifikat 8, als Mehrzahl von Zertifikaten 8 oder unabhängig davon), zu lesen und zu verändern. Die Überwachungseinheit 2 kann daher zweckmäßigerweise als aktiver RFID oder WLAN-Tag ausgestaltet sein oder einen solchen umfassen. Das Kommunikationsmittel 6 fungiert als Signalempfänger und als aktiver Signalgeber.

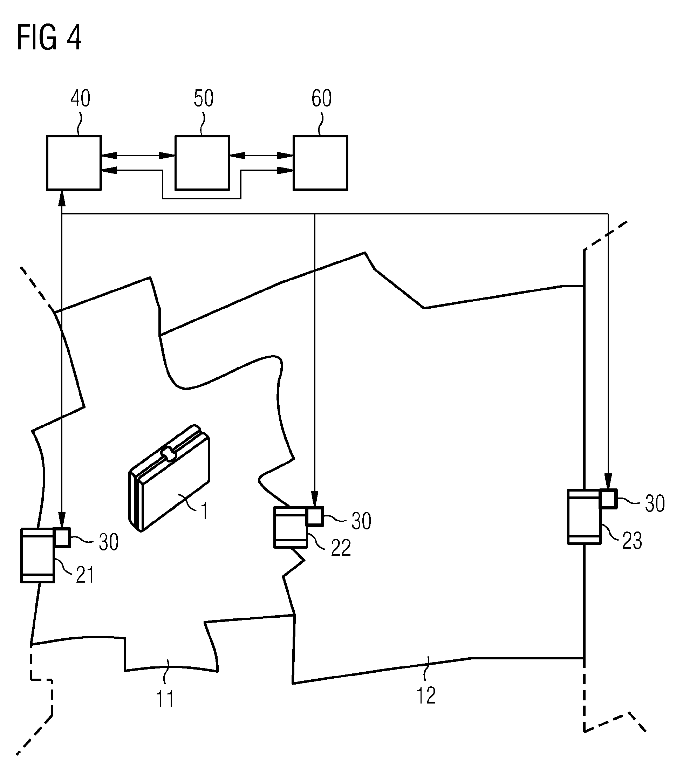

Figur 4 zeigt ein komplexes Ausführungsbeispiel, das sich etwa für eine Gepäcküberwachung auf Flughäfen eignet. Gezeigt ist erneut ein Behälter 1, welcher sich in einer ersten Sicherheitszone 11 befindet. Weiterhin ist eine zweite Sicherheitszone 12 gezeigt. Die erste Sicherheitszone 11 und die zweite Sicherheitszone 12 sind üblicherweise auf Flughäfen entsprechend der vorliegenden funktionalen Raumeinheiten und Sicherheitsvorschriften eingeteilt. Bei der ersten Sicherheitszone 11 und der zweiten Sicherheitszone 12 kann es sich beispielsweise um eine Abfertigungszone, Gepäcktransportzone, Abflugzone, Flughafen-Innenzone, Ankunftszone, Gepäckausgabezone oder Zollzone (letztere flughafenübergreifend) handeln.

Figur 4 zeigt weiterhin eine erste Schleuse 21, eine zweite Schleuse 22 sowie eine dritte Schleuse 23, die jeweils über eine Funk-Lese- und Schreibeinrichtung 30 verfügen und sicherstellen sollen, dass ein Eintritt in die oder ein Verlassen der ersten Sicherheitszone 11 bzw. der zweiten Sicherheitszone 12 durch einen Behälter 1 (im Flughafenszenario ein Gepäckstück) ausschließlich durch diese Schleusen erfolgt. Hierbei haben die Funk-Lese- und Schreibeinrichtungen 30 jeweils die Aufgabe, mit der Überwachungseinheit 2 am Behälter 1 zu kommunizieren und beispielsweise den Zustand des Siegels 4 oder das Zertifikat 8 über Funk auszulesen. Umgekehrt können auch Informationen durch die Funk-Lese- und Schreibeinheiten 30 in den Speicher 7 der jeweiligen Überwachungseinheit 2 geschrieben werden.

Figur 4 zeigt außerdem ein Lokalisierungssystem 40. Dem Lokalisierungssystem 40 kann neben einer Lokalisierung auch die Funktion eines Kommunikationssystems zukommen. Das Lokalisierungssystem 40 ist in Figur 4 mit einem Transportsystem 50 vernetzt. Über diese Schnittstelle wird gewährleistet, dass ein Aufenthaltsort des Behälters 1 in einem Förderbereich (im Flughafenszenario ein Gepäckförderbereich) feststellbar ist und verfolgt werden kann. Das Lokalisierungssystem 40 hat generell die Aufgabe, einen Aufenthaltsort des Behälters 1 zu ermitteln. Das Transportsystem 50 ist im Flughafenszenario ein Gepäcktransportsystem (Baggage-Handling-System). Solche Systeme werden zukünftig mit RFID-Labels an Transportbehältern arbeiten. Diese können im Rahmen des vorliegenden Ausführungsbeispiels selbstverständlich einbezogen werden. Das Lokalisierungssystem 40 ermittelt einen Aufenthaltsort und damit eine Zonenzugehörigkeit des Behälters 1 innerhalb von Sicherheitszonen oder auch Bereichen, welche nicht durch Gebäude begrenzt sind (zum Beispiel auf einem Flugfeld) durch eine Lokalisierung mit Hilfe mehrerer Funk-Lese- und Schreibeinrichtungen 30 sowie zyklischem Informationsaustausch zwischen der Überwachungseinheit 2 und den Funk-Lese- und Schreibeinrichtungen 30. Weiterhin kann im Zuge dieser Lokalisierung ein Identifikationsmerkmal des Behälters 1 von der Überwachungseinheit 2 an das Lokalisierungssystem 40 bzw. das Transportsystem 50 übertragen werden und steht damit allen angebundenen weiteren Systemen als Kombination Behälter-Identifikationsmerkmal-Aufenthaltsort zur Verfügung.

Abschließend zeigt Figur 4 ein Überwachungssystem 60, welches sowohl mit dem Lokalisierungssystem 40 als auch dem Transportsystem 50 kommuniziert. Das Überwachungssystem 60 überwacht die innerhalb von Sicherheitszonen befindlichen Behälter 1 gemäß den jeweiligen Sicherheitsvorschriften. Hierzu verfügt das Überwachungssystem 60 über eine Karte mit räumlichen Abgrenzungen der ersten Sicherheitszone 11 und der zweiten Sicherheitszone 12 (und ggf. einer beliebigen Anzahl weiterer Sicherheitszonen). Weiterhin werden beispielsweise das Identifikationsmerkmal und der zuvor beschriebene Status (hier insbesondere der Versiegelungs- und der Sicherheitsstatus) für den Behälter 1 von der Überwachungseinheit 2 mittels dem Kommunikationsmittel 6 an das Überwachungssystem 60 gesendet, wobei dies beispielsweise über die Funk-Lese- und Schreibeinrichtungen 30, das Transportsystem 50 oder das Lokalisierungssystem 40 (abhängig vom jeweiligen räumlichen Aufenthaltsort des Behälters 1) erfolgt. Auf umgekehrten Weg lasst sich der Status (hier insbesondere der Versiegelungs- und der Sicherheitsstatus) des Behälters 1 durch das Überwachungssystem 60 von der Überwachungseinheit 2 abfragen und ggf. auch verändern. Wie zuvor beschrieben ist der Status als Zertifikat 8 oder unabhängig davon im Speicher 7 der Überwachungseinheit 2 abgelegt. Alternativ zu dem Versiegelungsstatus kann auch einfach der Zustand des Siegels 4 verwendet (und geändert) werden, wenn dies den jeweiligen Anforderungen genügt.

Im Folgenden werden Grundfunktionalitäten beschrieben, welche durch eine Interaktion zwischen den in Figur 4 gezeigten Systemen mit den Überwachungseinheiten 2 mehrerer Behälter 1 realisiert werden, und die im Zuge unterschiedlicher Verfahren, die weiter unten beschrieben sind, kombiniert werden können:
- Im Flughafenszenario wird vor Beginn einer Reise jeder Behälter 1 (hier jedes Gepäckstück) mittels der Überwachungseinheit 2 und deren Siegel 4 versiegelt. Weiterhin wird eine eindeutige Zuordnung des Behälters 1 zu einem Reisenden vorgenommen. Hierzu bekommt jeder Behälter 1 sowie der Reisende ein entsprechendes Identifikationsmerkmal. Im Speicher 7 der Überwachungseinheit 2 werden nun das Identifikationsmerkmal sowie der Versiegelungsstatus ("versiegelt", entsprechend dem intakten Zustand des Siegels 4) oder der Zustand des Siegels 4 selbst gespeichert. Der Zustand des Siegels 4 (oder der Versiegelungsstatus) kann ggf. optisch an der Überwachungseinheit 2 für den Reisenden oder einen anderen Benutzer angezeigt werden (zum Beispiel "Gepäckstück versiegelt - nicht öffnen", "Siegel kann gelöst werden" oder "Gepäckstück ist unversiegelt"). Gleiches gilt für den Zollstatus oder andere Informationen. In diesem Kontext kann die Überwachungseinheit 2 auch Bedienelemente vorsehen.
- Ein Eintritt in die erste Sicherheitszone 11 oder die zweite Sicherheitszone 12 bzw. ein Austritt aus der ersten Sicherheitszone 11 oder zweiten Sicherheitszone 12 durch die erste Schleuse 21, die zweite Schleuse 22 oder die dritte Schleuse 23 wird sowohl im Speicher 7 der Überwachungseinheit 2 des jeweiligen Behälters 1 mit Hilfe der Funk-Lese- und Schreibeinrichtung 30 als auch im Überwachungssystem 60 gespeichert.

- Weiterhin wird der Zustand des Siegels 4 mit Hilfe der Recheneinheit 3 des Behälters 1 überwacht und an das Überwachungssystem 60 gemeldet. Insbesondere werden Änderungen des Zustands des Siegels 4 von der Überwachungseinheit 2 an das Überwachungssystem 60 gemeldet. Alternativ kann der Zustand des Siegels 4 (oder der Versiegelungsstatus) auch zyklisch durch das Überwachungssystem 60 von der Überwachungseinheit 2 abgefragt werden.
- Bei Eingangsschleusen in einer Sicherheitszone erfolgt wie auch bisher auf Flughäfen üblich eine Sicherheitsüberprüfung. Ein erfolgreiches Durchqueren einer Eingangsschleuse mit bestandener Sicherheitsprüfung wird als Zertifikat 8 (hier Sicherheitsstatus) im Speicher 7 der Überwachungseinheit 2 des Behälters 1, der die Schleuse passiert, gespeichert und zusätzlich auch im Überwachungssystem 60 registriert.
- Ein Aufenthaltsort des Behälters 1 wird zyklisch durch das Lokalisierungssystem 40 bzw. das Transportsystem 50 erfasst und an das Überwachungssystem 60 gemeldet.

Aus den zuvor beschriebenen Grundfunktionalitäten lassen sich einige Verfahren zur Verbesserung der Überwachung der Behälter 1, im Flughafenszenario also zur Verbesserung der Gepäcküberwachung und Gepäcksicherheit, entwickeln, die im Folgenden beschrieben werden.

Gemäß einem ersten weiterführenden Ausführungsbeispiel wird der Zustand des Siegels 4 oder der Status (definiert wie oben) von Gepäckstücken überwacht. Hierzu wird bei jeder Änderung des Zustands des Siegels 4 oder des Status des Behälters 1 das Zertifikat 8 im Speicher 7 gespeichert oder aktualisiert. Es können natürlich auch jeweils unterschiedliche Zertifikate 8 für den Zustand des Siegels 4 und den Status (bzw. für den Versiegelungsstatus, den Zollstatus usw.) gespeichert werden. Weiterhin können auch Sequenzen von Zertifikaten 8 gespeichert werden, bei denen ältere Zertifikate 8 im Speicher 7 nicht überschrieben werden und daher erhalten bleiben. Neben der Speicherung als Zertifikat 8 werden die Änderungen des Status des Behälters 1 auch an das Überwachungssystem 60 gemeldet. Das Überwachungssystem 60 überprüft die Plausibilität dieser gemeldeten Statusinformationen auf Basis vordefinierter Regeln für zulässige Aktionen.

Als vordefinierte Regeln eignen sich etwa:
- Der in Figur 4 gezeigte Behälter 1 befindet sich in der ersten Sicherheitszone 11. Dieser Aufenthaltsort ist für den Behälter 1 nur dann zulässig, wenn seine Überwachungseinheit 2 in ihrem Speicher 7 ein entsprechendes Zertifikat 8 aufweist. Das Zertifikat 8 muss hier etwa ausweisen, dass der Behälter 1 beim Einbringen in die erste Sicherheitszone 11 durch die erste Schleuse 21 eine Sicherheitsprüfung erfolgreich durchlaufen hat. Der Aufenthaltsort des Behälters 1 wird über das Lokalisierungssystem 40 bzw. das Transportsystem 50 erfasst und an das Überwachungssystem 60 gemeldet. Das Überwachungssystem 60 fragt über das Lokalisierungssystem 40 oder das Transportsystem 50 das Zertifikat 8 des Behälters 1 ab. Wenn das Zertifikat 8 im Speicher 7 der Überwachungseinheit 2 fehlt oder als Autorisierung für den Aufenthalt in der ersten Sicherheitszone 11 ungültig ist, wird durch das Überwachungssystem 60 ein Alarm ausgelöst. Derartige Prüfungen durch das Überwachungssystem 60 können zyklisch erfolgen. Weiterhin kann auch eine initiale Prüfung erfolgen, nachdem die an der ersten Schleuse 21 befindliche Funk-Lese- und Schreibeinrichtung 30 meldet, dass der Behälter 1 die erste Schleuse 21 passiert hat.
- Ein Öffnen des Behälters 1 ist nur zulässig, wenn dieser zuvor durch das Überwachungssystem 60 freigegeben wurde. Eine automatische Freigabe erfolgt, wenn der Behälter 1 beispielsweise eine äußerste Sicherheitszone verlässt (etwa in der Gepäckausgabezone eines Flughafens). Wird der Behälter 1 ohne Freigabe durch das Überwachungssystem 60 geöffnet, meldet die Überwachungseinheit 2 die unzulässige Öffnung an das Überwachungssystem 60, welches einen Alarm auslöst. Neben dem Öffnen des Behälters 1 gilt dies auch für ein unautorisiertes Entfernen der Überwachungseinheit 2 vom Behälter 1.
- Bei Öffnung des Behälters 1 verfallen alle Zertifikate 8, die im Speicher 7 der Überwachungseinheit 2 gespeichert sind. Wenn die Öffnung regulär erfolgt, beispielsweise nach einer manuellen Freigabe durch Sicherheitspersonal (etwa im Rahmen einer manuellen Sicherheitsprüfung oder einer Zollprüfung), müssen Sicherheitsprüfungen erneut durchlaufen bzw. erforderliche Zertifikate 8 vom Sicherheitspersonal über das Überwachungssystem 60 manuell vergeben und im Speicher 7 der Überwachungseinheit 2 abgelegt werden, bevor ein Aufenthalt in der jeweiligen Sicherheitszone wieder zulässig ist.

Im Flughafenszenario lassen sich hierbei Varianten für Transportgepäck und Handgepäck unterscheiden. Bei Transportgepäck als Behälter 1 (etwa ein Reisekoffer) wird der Behälter 1 mithilfe der Überwachungseinheit 2 bei Gepäckaufgabe versiegelt. Alternativ kann der Behälter 1 herstellerseitig mit einem integrierten Schloss versehen werden (etwa ein eingebautes Schloss mit herstellerseitig integrierter Überwachungseinheit 2 oder ein integriertes Schloss, welches elektronisch an die Überwachungseinheit 2 gekoppelt werden kann). Anschließend wird der Behälter 1 durch das Transportsystem 50 weitertransportiert. Eine Vergabe der Zertifikate 8 erfolgt mittels der im Transportsystem 50 befindlichen Funk-Lese- und Schreibeinrichtungen 30. Bei einem Verladen der Behälter 1 in ein Flugzeug durch Verladepersonal werden folgende Plausibilitäts- und Sicherheitsprüfungen durchgeführt, wobei als Funk-Lese- und Schreibeinrichtungen 30 hier transportable Geräte wie etwa Handscanner oder in Handschuhen angebrachte Scanner in Frage kommen:
- Über das Identifikationsmerkmal des Behälters 1 wird geprüft, ob der Behälter 1 wirklich in das richtige Flugzeug verladen wird. Unpassende Behälter 1 führen zu einer Fehlermeldung (beispielsweise akustisch oder optisch durch eine Anzeige an der transportablen Funk-Lese- und Schreibeinrichtung 30).
- Über im Speicher 7 der Überwachungseinheit 2 abgelegte Zertifikate 8 sowie den Zustand des Siegels 4 wird geprüft, ob der Behälter 1 alle erforderlichen Sicherheitsprüfungen durchlaufen hat und anschließend nicht mehr geöffnet wurde.
- Eine Position des Behälters 1 im Flugzeug kann automatisch protokolliert werden. Mithilfe dieser Information lässt sich das Entladen des Behälters 1 aus dem Flugzeug beschleunigen. Dies ist erforderlich, wenn ein Passagier trotz Check-in nicht am Abflug-Gate erscheint. In der Variante zur Behandlung des Handgepäcks erfolgt die Versiegelung mithilfe der Überwachungseinheit 2 durch eine vorgelagerte Screening- und Siegelstation in einer Abfertigungszone oder an einer Sicherheitsschleuse zu einer Abflugzone.

Für Handgepäck sind unterschiedliche Regeln möglich, beispielsweise:
- Handgepäck darf nach erfolgter Versiegelung bis zum Betreten oder bis nach Verlassen des Flugzeugs nicht mehr geöffnet werden und wird erst im Flugzeug zur Entsiegelung freigegeben. Hierzu existiert im Flugzeug bzw. am Gateway eine Funk-Lese- und Schreibeinrichtung 30, welche an das Überwachungssystem 60 gekoppelt ist. Durch unzulässiges Lösen der Versiegelung in der Überwachungseinheit 2 (also ohne Freigabe des Überwachungssystems 60) erfolgt durch die Überwachungseinheit 2 eine Meldung an das Überwachungssystem 60, welches einen Alarm auslöst.
- Alternativ kann ein Öffnen der Versiegelung an Handgepäck erlaubt werden. Hierbei verfallen jedoch alle Zertifikate 8, welche in der Überwachungseinheit 2 gespeichert sind. Anschließend müssen daher notwendige Sicherheitsprüfungen erneut durchlaufen werden. Beim Boarding erfolgt am Gateway eine Überprüfung des Handgepäcks auf gültige Zertifikate 8 mittels einer am Boarding-Schalter befindlichen Funk-Lese- und Schreibeinrichtung 30. Handgepäck, welches nicht die erforderlichen gültigen Zertifikate 8 aufweist, muss vor Betreten des Flugzeugs nochmals eine Sicherheitsschleuse durchlaufen.

In einem zweiten weiterführenden Ausführungsbeispiel erfolgt eine flughafenübergreifende Koordination von Sicherheits- bzw. Zollkontrollen für Transportgepäck.

Sicherheitskontrollen werden bisher flughafenspezifisch durchgeführt. Indem mit Hilfe der Überwachungseinheit 2 für jeden Behälter 1 der Zustand des Siegels 4 und Zertifikate 8 als Status (etwa Versiegelungsstatus und Sicherheitsstatus) vorliegen, lässt sich bei Transferflügen eine erhöhte Sicherheit gewährleisten, ohne dass erneute Sicherheitsprüfungen erforderlich sind. Hierzu wird am Transferflughafen für umzuladende Behälter 1 deren Zustand des Siegels 4 und Zertifikate 8 ausgelesen (beispielsweise bei einem Entladen eines Flugzeugs durch Verladepersonal mittels transportabler Funk-Lese- und Schreibeinrichtungen oder bei einer Einschleusung in das Transportsystem 50 durch dort befindliche Funk-Lese- und Schreibeinrichtungen 30) und an das Transferflughafenspezifische Überwachungssystem 60 ermittelt. Für den weiteren Transport im Transferflughafen werden die ausgelesenen Zertifikate 8 bzw. der Zustand des Siegels 4 berücksichtigt, sodass gegebenenfalls andernfalls erforderliche Sicherheitsprüfungen entfallen können. Zusätzlich lassen sich im Speicher 7 der Überwachungseinheit 2 jedes Behälters 1 auch Zollinformationen speichern. In diesem Fall können wiederholte Zollkontrollen entfallen.

Ein drittes weiterführendes Ausführungsbeispiel behandelt herrenlose Gepäckstücke. Dies sind Behälter 1 innerhalb eines Flughafens, welche nicht visuell einer Person zugeordnet werden können. Sie erfordern eine besonders aufwändige sicherheitstechnische Behandlung. Durch Anwendung der zuvor beschriebenen Grundfunktionalitäten lässt sich ein Verfahren beschreiben, welches diese Abläufe deutlich vereinfacht:
- Wird ein Behälter 1 durch das Sicherheitspersonal (gegebenenfalls auch mittels Raumüberwachung mit Kameras) als keiner Person zuordenbar eingeschätzt, so kann manuell über das Überwachungssystem 60 die zuvor beschriebene und im Zuge der Lokalisierung im Lokalisierungssystem 40 erzeugte Kombination Behälter-Identifikationsmerkmal-Aufenthaltsort abgefragt und der zum Behälter 1 zugehörige Zustand seines Siegels 4 sowie der auf ihm gespeicherten Zertifikate 8 abgefragt werden. Wenn der Zustand des Siegels 4 und die Zertifikate 8 gültig sind und den Sicherheitsvorschriften für die entsprechende Sicherheitszone entsprechen, ist keine gesonderte sicherheitsrelevante Behandlung des Behälters 1 erforderlich.
- Weiterhin lässt sich aus dem Identifikationsmerkmal des Behälters 1 dessen Besitzer ermitteln, sodass dieser informiert werden kann.
- Alternativ lassen sich der Zustand des Siegels 4 und die Zertifikate 8 des Behälters 1 manuell durch Sicherheitspersonal mittels einer transportablen Funk-Lese- und Schreibeinrichtung 30 in räumlicher Nähe des Behälters 1 abfragen, wenn eine Gefahr besteht, dass im Überwachungssystem 60 abgelegte Informationen über den Zustand des Siegels 4 bzw. die Zertifikate 8 des lokalisierten und identifizierten Behälters 1 möglicherweise nicht aktuell sind. Dies betrifft auch den Fall, dass eine Lokalisierung und Identifizierung des Behälters 1 über das Lokalisierungssystem 40 nicht möglich ist.

Ein viertes weiterführendes Ausführungsbeispiel betrifft eine lückenlose Überwachung von Transportrouten von Gepäckstücken.

Hierzu wird im Überwachungssystem 60 eine Historie einer Sicherheitszonen-Zugehörigkeit und gegebenenfalls zusätzlich eine Historie der Aufenthaltsorte von Behältern 1 gespeichert. Daraus lässt sich im Nachhinein eine Transportroute der Behälter 1 nachvollziehen. Diese Informationen können zum Einen für eine nachträglich Untersuchung von sicherheitsrelevanten Vorgängen und zum Anderen für ein einfacheres Auffinden verloren gegangener Behälter 1 verwendet werden. Zusätzlich lässt sich die Historie der Sicherheitszonen-Zugehörigkeit bzw. der Aufenthaltsorte des Behälters 1 auch im Speicher 7 der Überwachungseinheit 2 des Behälters 1 ablegen (vergleichbar zu einer reduzierten Funktionalität eines Flugschreibers), sodass eine Nachvollziehbarkeit über eine gesamte Reiseroute möglich ist.

Die beschriebenen Varianten und weiterführenden Ausführungsbeispiele lassen sich frei miteinander kombinieren. Im Flughafenszenario verhindern sie wirkungsvoll ein unerlaubtes Öffnen von Gepäckstücken, eine Umgehung von Sicherheitsbestimmungen oder auch ein Einschmuggeln von Gepäckstücken. Sicherheitsprüfungen lassen sich durch flughafenübergreifende Koordination auf Basis der auf den Behälter 1 gespeicherten Zertifikate 8 reduzieren. Ein eindeutiger Nachweis eines Besitzers eines Behälters 1 ermöglicht eine Fehlervermeidung bei Gepäcktransport und eine einfachere Handhabung von herrenlosen Gepäckstücken. Über die vollständige Transparenz eines Sicherheitsstatus von Handgepäck wird die Sicherheit von Flugzeugen erhöht. Sicherheitsprüfungen für Transportgepäck bei Transferflügen werden reduziert. Gleiches gilt für Zollkontrollen. Aufwändige sicherheitstechnische Maßnahmen für herrenlose Gepäckstücke können vermieden werden. Abschließend lässt sich die Transportroute bzw. der Aufenthaltsort von Gepäckstücken lückenlos überwachen und nachvollziehen.

## Patentansprüche

1. Vorrichtung zur Überwachung eines Behälters (1),
- mit einem Siegel (4), ausgelegt zur Änderung seines Zustands bei einem Öffnen des Behälters (1), und
- mit einer Recheneinheit (3), eingerichtet zum Empfang des Zustands des Siegels (4) und zur Kommunikation des Zustands des Siegels (4) mithilfe eines Kommunikationsmittels (6).

2. Vorrichtung nach Anspruch 1,
- bei der die Recheneinheit (3) eingerichtet ist, um mindestens ein Zertifikat (8) in einem Speicher (7) abzulegen, welches einen Status des Behälters (1) repräsentiert.

3. Behälter, welcher eine Vorrichtung nach Anspruch 1 oder 2 aufweist.

4. Behälter nach Anspruch 3, welcher ein Gepäckstück ist.

5. Verteiltes System zur Überwachung von Behältern (1),
- mit mindestens einer Funk-Lese- und Schreibeinrichtung (30), eingerichtet zur Kommunikation mit einer Vorrichtung nach Anspruch 1 oder 2, und
- mit einem Überwachungssystem (60), eingerichtet zum Empfang des Zustands des Siegels (4) der Vorrichtung nach Anspruch 1 oder 2 von der mindestens einen Funk-Lese- und Schreibeinrichtung (30).

6. Verteiltes System nach Anspruch 5,
- mit einem Lokalisierungssystem (40), eingerichtet zur Ortung einer Vorrichtung nach Anspruch 1 oder 2 mithilfe der mindestens einen Funk-Lese- und Schreibeinrichtung (30).

7. Verteiltes System nach Anspruch 5,
- mit einem Transportsystem (50), eingerichtet zum Transport von Behältern (1), welche die Vorrichtung nach Anspruch 1 oder 2 aufweisen.

8. Verfahren zur Überwachung mindestens eines Behälters (1), bei dem
- ein Siegel (4) seinen Zustand bei einem Öffnen des Behälters (1) ändert, und
- eine Recheneinheit (3) den Zustands des Siegels (4) empfängt und mithilfe eines Kommunikationsmittels (6) kommuniziert.

9. Verfahren nach Anspruch 8,
- bei dem die Recheneinheit (3) mindestens ein Zertifikat (8) in einem Speicher (7) ablegt, welches einen Status des Behälters (1) repräsentiert.

10. Verfahren nach Anspruch 9,
- bei dem mindestens eine Funk-Lese- und Schreibeinrichtung (30) mit der Recheneinheit (3) kommuniziert, und
- bei dem ein Überwachungssystem (60) den Zustand des Siegels (4) oder das Zertifikat (8) von der mindestens einen Funk-Lese- und Schreibeinrichtung (30) empfängt.

11. Verfahren nach Anspruch 10,
- bei dem ein Lokalisierungssystem (40) einen Aufenthaltsort des Behälters (1) mithilfe der mindestens einen Funk-Lese- und Schreibeinrichtung (30) bestimmt.

12. Verfahren nach Anspruch 10,
- bei dem ein Transportsystem (50) Behälter (1) transportiert, welche die Recheneinheit (3), das Siegel (4) und das Kommunikationsmittel (6) aufweisen.

13. Verfahren nach Anspruch 9,
- bei dem der Behälter (1) vor einem Eintritt in eine erste Sicherheitszone (11) eine erste Schleuse (21) und eine Sicherheitsprüfung durchläuft, und
- bei dem das Zertifikat (8) nach erfolgter Sicherheitsprüfung im Speicher (7) abgelegt wird und angibt, dass der Behälter (1) für einen Aufenthalt in der ersten Sicherheitszone (11) zugelassen ist.

14. Verfahren nach Anspruch 11 und 13,
- bei dem das Überwachungssystem (60) überprüft, ob der Aufenthaltsort des Behälters (1) innerhalb der ersten Sicherheitszone (11) oder einer weiteren Sicherheitszone liegt, und
- bei dem das Überwachungssystem (60) anhand des Zertifikats (8) des Behälters (1) überprüft, ob dieser für den Aufenthalts in der jeweiligen Sicherheitszone zugelassen ist.

15. Computerlesbarer Datenträger,
- auf dem ein Computerprogramm gespeichert ist, welches das Verfahren nach Anspruch 8 bis 14 ausführt, wenn es in einem Computer abgearbeitet wird.

16. Computerprogramm,
- welches in einem Computer abgearbeitet wird und dabei das Verfahren nach einem der Ansprüche 8 bis 14 ausführt.
